# EUROPÄISCHE PATENTSCHRIFT

(11) **EP 0 865 852 B1**
(45) Veröffentlichungstag und Bekanntmachung des Hinweises auf die Patenterteilung: **27.06.2001**
(21) Anmeldenummer: 98104658.4
(22) Anmeldetag: 14.03.1998
(51) Int. Cl.: B23B 31/117, B23Q 3/12

(54) **Vorrichtung zum Aufheizen eines Werkzeughalters**
Device for heating a tool holder
Dispositif pour chauffer un porte-outil

(30) Priorität: 21.03.1997 DE 29705185 U
(43) Veröffentlichungstag der Anmeldung: 23.09.1998
(73) Patentinhaber: Hauser GmbH, Werkzeug- Formen- und Maschinenbau, 79331 Teningen (DE)
(72) Erfinder: Hauser, Hermann, 79331 Teningen (DE)
(74) Vertreter: Schmitt, Hans, Dipl.-Ing.

(56) Entgegenhaltungen:
- EP-A- 0 437 322
- DE-A- 3 925 641
- DE-C- 4 215 607

## Beschreibung

Die Erfindung betrifft eine Vorrichtung zum Aufheizen eines zu einem Werkzeug-Spannfutter gehörenden - bzw. mit diesem verbundenen - Werkzeughalters, welches Werkzeug-Spannfutter ein in eine Werkzeugmaschine einsetzbares Kupplungsteil und den zum Beispiel zylindrischen oder konischen Werkzeughalter mit einer koaxialen Paßbohrung zur Aufnahme des Schaftes eines auswechselbaren Werkzeuges - zum Beispiel eines Bohrers, Fräsers oder dergleichen spanabhebenden Werkzeuges - aufweist, wobei die Vorrichtung eine Heizung zum Aufheizen und Dehnen des Werkzeughalters und seiner Paßbohrung aufweist.

Derartige Vorrichtungen sind in der Praxis bekannt und dienen dazu, den Werkzeughalter eines Werkzeug-Spannfutters aufzuheizen und dadurch insbesondere die Paßbohrung derart zu dehnen, daß das nicht geheizte, sondern demgegenüber kühlere Werkzeug einfach und leichtgängig eingesteckt werden kann und nach dem anschließenden Abkühlen des Werkzeughalters durch dessen Schrumpfung befestigt ist.

Beispielsweise ist aus der Praxis eine Vorrichtung vergleichbar der Offenbarung der DE-C-4215607 bekannt, bei welcher zum Aufheizen ein Heißluftgebläse vorgesehen ist, mit welchem heiße Luft gegen den Teil des Werkzeug-Spannfutters geblasen wird, das durch die Erwärmung aufgedehnt werden soll, um anschließend die Schrumpfbefestigung des Werkzeuges durchführen zu können. Dies ist aufwendig und relativ langwierig, weil Luft die Wärme schlecht überträgt, so daß sich insgesamt auch ein ungünstiger Wirkungsgrad ergibt. Außerdem besteht die Gefahr einer ungleichmäßigen Erwärmung.

Es ist ferner bekannt, den aufzuheizenden Teil des Werkzeug-Spannfutters der Wirkung einer Gasflamme auszusetzen, wobei das Werkzeug-Spannfutter relativ zu dieser Gasflamme gedreht wird. Es ist also eine Drehvorrichtung erforderlich und vor allem findet die Aufheizung mittels einer offenen Flamme statt, was in vielen Betrieben unerwünscht ist. Außerdem kann es durch eine offene Gasflamme an dem Werkzeughalter zu erheblichen Wärmespannungen und unter Umständen sogar zu einer zu starken Erwärmung kommen, die gegebenenfalls zu Gefügeänderungen an dem Werkzeughalter führen kann.

Bei diesen bisher bekannten Vorrichtungen und Methoden ist auch als ungünstig anzusehen, daß die erneute Aufheizung des Werkzeughalters zum Entnehmen des Werkzeuges relativ lange dauert und daß Werkzeug miterwärmt wird, so daß relativ hohe Trennkräfte erforderlich wären.

Aus EP-A-0 437 322 ist eine Vorrichtung anderer Gattung bekannt, bei welcher eine Spindeleinheit einer Werkzeugmaschine innerhalb dieser Werkzeugmaschine mit einer Heizvorrichtung und einer Kühlvorrichtung ausgestattet ist. Mit etwas Abstand zu dem fest installierten Werkzeughalter ist dabei eine Heizung vorgesehen, um durch Erwärmung dieses Werkzeughalters das Werkzeug lösen oder einsetzen und durch anschließendes Kühlen festlegen zu können. Damit können nur zu dieser Werkzeugmaschine und deren Werkzeughalter passende Werkzeuge behandelt werden.

Es besteht deshalb die Aufgabe, eine Vorrichtung der eingangs genannten Art zu schaffen, die einfach zu handhaben ist, eine schnelle und gezielte sowie möglichst präzise Aufheizung insbesondere nur des Werkzeughalters sowohl beim Einfügen als auch beim Lösen des Werkzeuges ermöglicht, ohne daß dieses selbst in nennenswerter Weise mitaufgeheizt wird, so daß auch die Trennung von Werkzeughalter und Werkzeug vereinfacht wird.

Die Lösung dieser Aufgabe besteht bei eines Vorrichtung der eingangs genannten Gattung darin, daß die Vorrichtung einen Einsatz mit einer paßgenauen Innenöffnung zur Aufnahme und flächigen Berührung der Außenseite des Werkzeughalters aufweist, daß dieser Einsatz aus einem gut wärmeleitenden Werkstoff oder Metall besteht und mit der Heizung beheizbar ist und daß der Einsatz und ein ihn haltendes Gehäuse in einer Längsmittel- oder Durchmesserebene, in der auch die Mittelachse der Aufnahmeöffnung verläuft, geteilt ist und die Teile des Einsatzes und seines Gehäuses voneinander trennbar oder auseinanderbewegbar sind.

Der Werkzeughalter eines Werkzeug-Spannfutters kann also paßgenau in einen Einsatz eingefügt und dort flächig berührt und beaufschlagt werden, so daß die über diesen Einsatz übertragene Heizenergie gleichmäßig, schnell und gezielt sowie in gewünschter Dosierung auf den Werkzeughalter übertragen werden kann. Er kann sich also mit einer weitgehend vorbestimmten Geschwindigkeit aufgrund der aufgebrachten Wärme ausdehnen, so daß sich eine weitgehend gleichmäßige Vergrößerung seiner Paßbohrung für das Werkzeug ergibt. Dieses kann entsprechend schnell und einfach eingesetzt werden, so daß es bei der nachfolgenden Abkühlung auch eine gleichmäßige und feste Verbindung durch diesen Schrumpfungsprozeß erhält. Eine offene Flamme wird ebenso vermieden wie eine relativ aufwendige Erwärmung mittels Heißluft.

Die Trennbarkeit des Einsatzes und des ihn haltenden Gehäuses erlaubt dabei, den Einsatz in noch warmem Zustand von dem erwärmten Werkzeughalter zu trennen, obwohl die beiden Teile durch die Wärmedehnung des Werkzeughalters zunächst auch eine Art Schrumpfverbindung miteinander eingehen. Diese kann durch das Öffnen des Einsatzes trotz der Erwärmung problemlos gelöst werden.

Besonders günstig ist bei der erfindungsgemäßen Vorrichtung der Werkzeugwechsel durchführbar, weil die Erwärmung des Werkzeughalters mittels des anliegenden Einsatzes das Werkzeug praktisch nicht erreicht, bevor der Werkzeughalter nicht genügend aufgeheizt ist, was dann aber bereits zu einem Spalt zwischen diesem Werkzeughalter und dem Werkzeug führt und das Werkzeug gegenüber dem Werkzeughalter isoliert. Eine Miterwärmung des Werkzeuges ist also weitestgehend ausgeschlossen oder nur in sehr geringem Umfange möglich, so daß die Schrumpfverbindung schnell und effektiv gelöst werden kann.

Zum Beheizen des Einsatzes und damit des Werkzeughalters kann eine elektrische Heizung vorgesehen sein. Diese erlaubt eine besonders gleichmäßige und nach außen isolierte Wärmeübertragung auf den Einsatz.

Dabei kann eine zweckmäßige und einfache Ausgestaltung darin bestehen, daß die Heizung an der Außenseite des Einsatzes etwa konzentrisch zu seiner Innenöffnung angeordnet und insbesondere als Heizspirale oder bevorzugt als elektrisches Heizband ausgebildet ist. Vor allem ein Heizband kann durch direkte Berührung der Außenseite des Einsatzes die Heizenergie effektiv und schnell auf diesen Heiz-Einsatz übertragen. Die Heizenergie wird also nicht - wie bei Verwendung einer Gasflamme - unmitelbar auf den Werkzeughalter selbst aufgebracht, sondern mittels des Einsatzes flächig, gezielt und gleichmäßig übertragen. Dabei wird die elektrische Heizung selbst gleichzeitig durch den Einsatz gegenüber dem Werkzeughalter abgeschirmt, kann also nicht durch das Einfügen und Lösen des Werkzeughalters beschädigt werden.

Die Innenöffnung kann zweckmäßigerweise durch den gesamten Einsatz verlaufen und nach beiden Seiten offen sein. Dadurch ist eine Beaufschlagung von Werkzeughaltern von unterschiedlicher Länge möglich.

Ferner kann der Einsatz lösbar und austauschbar in einem Gehäuse der Vorrichtung angeordnet sein. Dadurch ist es möglich, wahlweise Einsätze mit Innenöffnungen unterschiedlicher Abmessungen für unterschiedlich bemessene Werkzeughalter in derselben Vorrichtung zu verwenden.

Eine weitere Ausgestaltung der Erfindung kann darin bestehen, daß die Heizung für den Einsatz in einer Längsmittel- oder Durchmesserebene geteilt und trennbar oder auseinanderbewegbar ist. Dies erlaubt es, einen Teil der Heizung beim Trennen der Teile des Einsatzes und seines Gehäuses mit zu verschwenken oder zu verschieben.

Möglichkeiten dieser Trennbarkeit der Einzelteile des Einsatzes sind in Anspruch 7 angegeben und sehen entweder eine Verschwenkung der beiden Einsatzteile relativ zueinander oder aber eine Schiebeführung zum Auseinanderschieben dieser Teile vor.

Der Einsatz, seine Heizung und das Gehäuse können einen Handgriff aufweisen, durch welchen gegebenenfalls auch die Stromleitung für die elektrische Heizung geführt ist. Dies ermöglicht es dem Benutzer, schnell an unterschiedlichen Maschinen oder Werkzeugmaschinen die dort jeweils vorhandenen Werkzeug-Spannfutter und deren Werkzeughalter zu beareiten bzw. Werkzeuge aus diesen Haltern herauszunehmen und gegen andere Werkzeuge zu ersetzen.

Es ist aber auch möglich, daß die Vorrichtung als stationäres Gerät ausgebildet ist insbesondere dann, wenn viele Werkzeugwechsel anfallen und sich eine zentrale Bearbeitung dieser Werkzeugwechsel lohnt.

Nachstehend sind Ausführungsbeispiele der Erfindung anhand der Zeichnungen näher beschrieben. Es zeigt in zum Teil schematisierter Darstellung:
- Fig. 1: in schaubildlicher und teilweise aufgebrochener Darstellung eine erfindungsgemäße Vorrichtung zum Aufheizen des Werkzeughalters eines Werkzeug-Spannfutters mit Hilfe eines eine Innenöffnung aufweisenden, außenseitig elektrisch beheizbaren Einsatzes, der in Gebrauchsstellung mit der Innenseite seiner Innenöffnung die Außenseite des Werkzeughalters eines Werkzeug-Spannfutters flächig berührt,
- Fig.2: eine Draufsicht der Vorrichtung gemäß Fig.1 in Schließstellung,
- Fig.3: eine der Fig.2 entsprechende Draufsicht der Vorrichtung in Offenstellung, bei welcher eine Hälfte des Einsatzes und des diesen aufnehmenden Gehäuses relativ zu dem anderen verschwenkt ist,
- Fig.4: eine Draufsicht einer abgewandelten Ausführungsform der erfindungsgemäßen Vorrichtung in Schließstellung und
- Fig.5: eine Draufsicht der Vorrichtung gemäß Fig.4, bei welcher eine Hälfte des Einsatzes und seines Gehäuses relativ zu der anderen in axialer Richtung des Handgriffes in eine Offenstellung verschoben ist.

Eine im ganzen mit 1 bezeichnete Vorrichtung dient zum Aufheizen eines zu einem nicht dargestellten Werkzeug-Spannfutter gehörenden Werkzeughalters.DerartigeWerkzeug-Spannfutterhabenbekanntermaßen ein in eine Werkzeugmaschine einsetzbares Kupplungsteil und den davon getragenen und damit verbundenen, zum Beispiel zylindrischen oder konischen Werkzeugnhalter mit einer koaxialen Paßbohrung zur Aufnahme des Schaftes eines auswechselbaren Werkzeuges, zum Beispiel eines Bohrers oder Fräsers.

Die Vorrichtung 1 weist eine Heizung 2 zum Aufheizen und dadurch auch zum Aufdehnen des Werkzeughalters und seiner Paßbohrung auf, so daß deren Innendurchmesser vergrößert wird. Dies ermöglicht es, den Schaft des nicht aufgewärmten Werkzeuges leichtgängig in diese Paßbohrung einzusetzen, so daß durch die anschließende Abkühlung eine Schrumpfverbindung entsteht, die in gleicher Weise später durch erneutes Aufheizen des Werkzeughalters wieder gelöst werden kann.

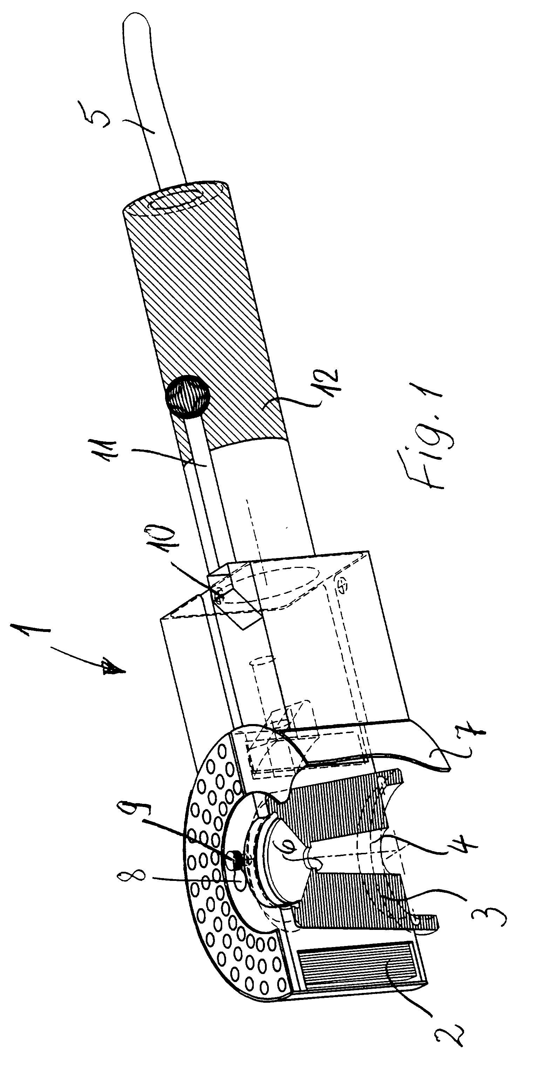

Vor allem in Fig.1 erkennt man, daß die Vorrichtung 1 einen Einsatz 3 mit einer paßgenauen Innenöffnung 4 zur Aufnahme und flächigen Berührung der Außenseite des erwähnten Werkzeughalters aufweist, wobei dieser Einsatz 3 zweckmäßigerweise aus einem die Wärme gut leitenden Werkstoff, bevorzugt aus Metall, zum Beispiel einer Aluminiumlegierung, besteht und mit der Heizung 2 beheizbar ist.

In Fig.1 ist durch das elektrische Kabel bzw. die Stromleitung 5 verdeutlicht, daß zum Beheizen des Einsatzes 3 und damit des Werkzeughalters eine elektrische Heizung 2 vorgesehen ist. Diese Heizung 2 ist gem. Fig.1 an der Außenseite des Einsatzes 3 etwa konzentrisch zu dessen Innenöffnung 4 angeordnet und zum Beispiel als Heizspirale oder als elektrisches Heizband ausgebildet, welches ggfs. unmittelbar an der Außenseite des Einsatzes 3 anliegen kann, um die Heizenergie bestmöglich auf den Einsatz 3 und damit auch auf den Werkzeughalter zu übertragen.

Dabei ist vorgesehen, daß die Innenöffnung 4 durch den gesamten Einsatz 3 verläuft, also nach beiden Seiten offen ist, so daß gegebenenfalls der Werkzeughalter auch etwas überstehen könnte. Dies ist allerdings im Ausführungsbeispiel gemäß Fig.1 durch eine Verengung 6 am engeren Ende der in diesem Falle konischen Innenöffnung 4 verhindert, die gleichzeitig als Anschlag für den Werkzeughalter dienen kann.

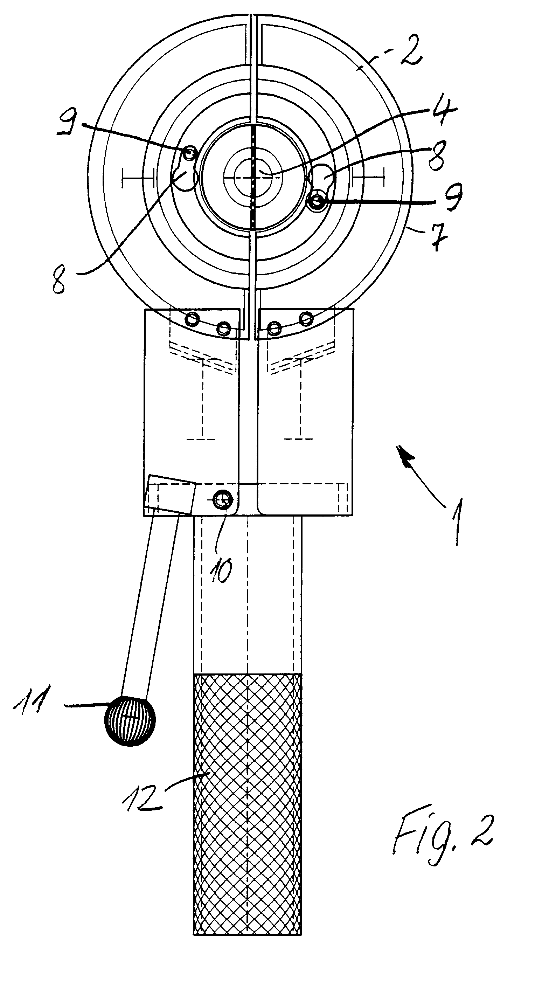

Der Einsatz 3 kann mittels eines Bajonettverschlusses lösbar und austauschbar in einem Gehäuse 7 der Vorrichtung 1 angeordnet sein. Vor allem in den Fig.2 bis 5 erkennt man die zu dem Bajonettverschluß gehörenden und an einem Ende erweiterten Lochungen 8 des Gehäuses 7, die mit entsprechenden Vorsprüngen 9 an dem Einsatz 3 in bekannter Weise zusammenwirken. Da der Einsatz 3 das Gehäuse 7 gemäß Fig.1 nach unten etwas überragt, kann er leicht erfaßt und soweit verdreht werden, daß die Haltevorsprünge 9 durch die Erweiterungen der Lochungen 8 bewegt werden können. In den Zeichnungen befindet sich der Einsatz 3 in seiner Befestigungsstellung. Diese Austauschbarkeit ermöglicht die Verwendung von Einsätzen 3 mit unterschiedlich bemessenen Innenöffnungen 4, so daß also eine Anpassung an unterschiedliche Werkzeughalter schnell und einfach möglich ist.

In den Fig.2 bis 5 ist dargestellt, daß der Einsatz 3 und das ihn haltende Gehäuse 7 sowie auch die Heizung 2 in einer Längsmittel- und Durchmesserebene, in der auch die Mittelachse der Aufnahmeöffnung 4 verläuft, geteilt ist und die beidseits dieser Trennebene befindlichen Teile des Einsatzes 3 und seines Gehäuses 7 mit der Heizung 2 voneinander trennbar oder auseinander bewegbar sind.

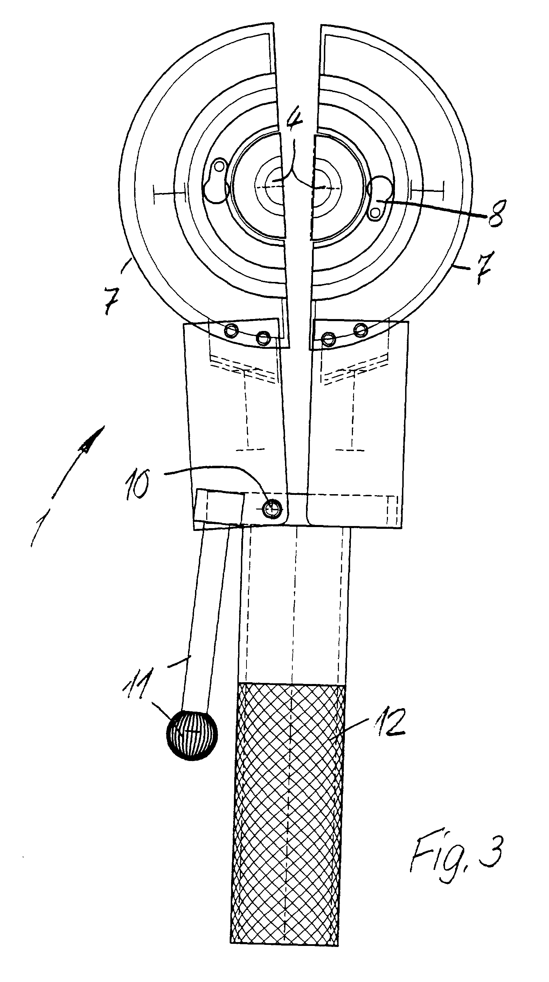

Gemäß dem Ausführungsbeispiel nach Fig.1 bis 3 ist am Rand des Einsatzes 3 oder seines Gehäuses 7 mit Abstand dazu ein Gelenk 10 oder Scharnier angeordnet, dessen Achse parallel zur Mittelachse der Innenöffnung 4 verläuft und um welche eines der Teile des Einsatzes 3 und des zugehörigen Gehäuses 7 mit Teil der Heizung 2 relativ zu dem anderen verschwenkbar ist, was durch den Vergleich der Figuren 2 und 3 deutlich wird. Der verschwenkbare Teil hat dabei einen Schwenkgriff 11, der relativ zu einem Handgriff 12 des gesamten Handgerätes, als welches die Vorrichtung 1 im Ausführungsbeispiel ausgebildet ist, verschwenkt werden kann.

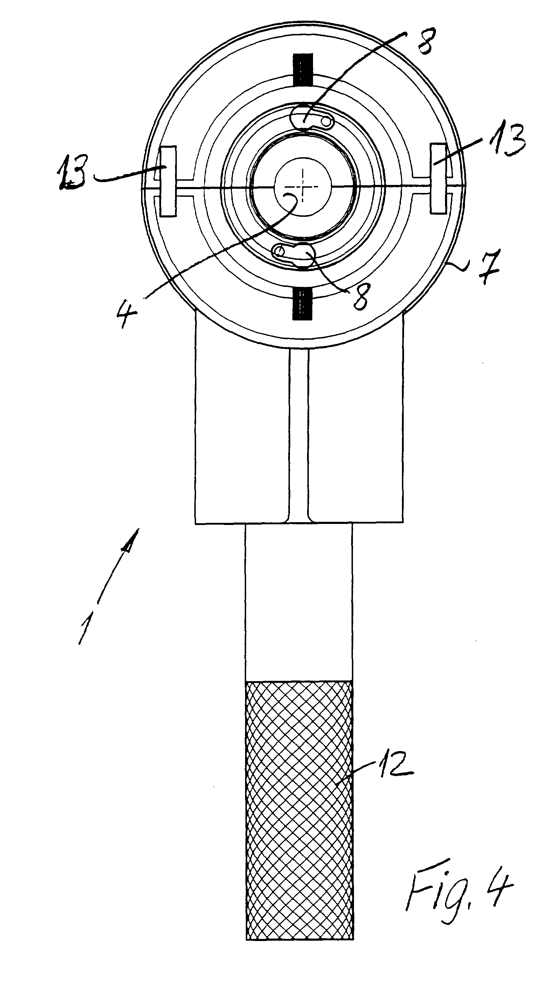

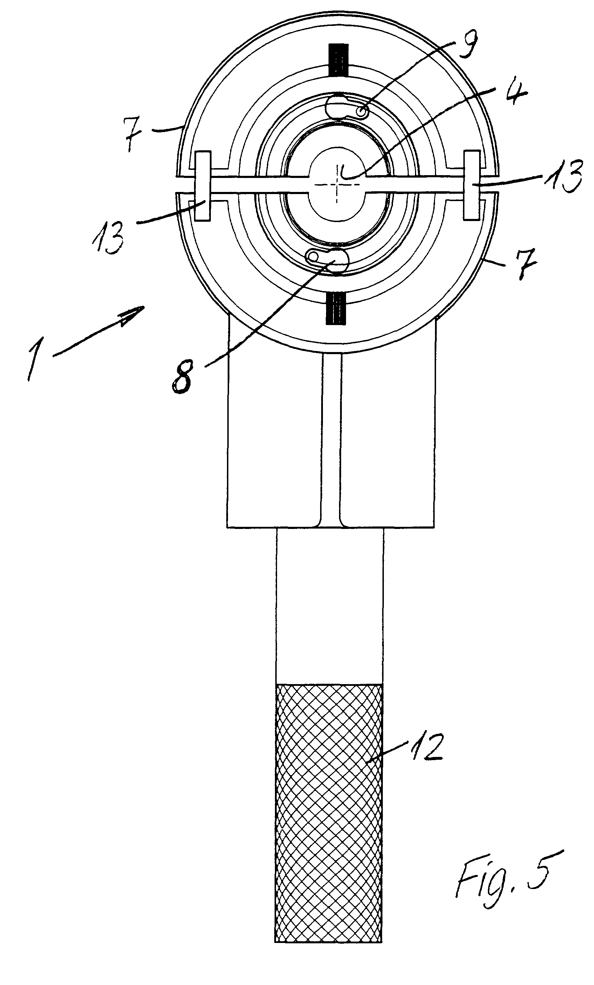

In den Fig.4 und 5 ist eine abgewandelte Ausführungsform dargestellt, bei welcher die Trennebene gegenüber der des Ausführungsbeispieles nach Fig.1 bis 3 um 90° verdreht vorgesehen ist, also quer zu dem Handgriff 12 verläuft. Dabei ist eine schematisiert angedeutete Schiebeführung 13 jeweils beidseits der Mitte an einander gegenüberliegenden Stellen vorgesehen, mittels welcher ein Teil des Einsatzes 3 und des zugehörigen Gehäuses 7 sowie auch der darin enthaltenen Heizung 2 relativ zu dem anderen in Richtung von dem Handgriff 12 weg verschiebbar ist.

Man erkennt in den Fig.3 und 5, die jeweils die geöffnete Lage darstellen, daß durch diese Maßnahmen die Innenöffnung 4 jeweils zu erweitert wird, daß eine Trennung des erwärmten Werkzeughalters von dem Einsatz 3 und damit ein Lösen aus der Vorrichtung 1 möglich ist, obwohl durch diese Erwärmung der Werkzeughalter aufgrund seiner Dehnung eine entsprechend feste Verbindung mit dem Einsatz 3 eingeht. Diese feste Verbindung wird durch die Trennung des Einsatzes 3 gelöst, so daß der erwärmte Werkzeughalter trotzdem freigegeben werden kann.

Die Vorrichtung 1 weist den schon erwähnten Handgriff 12 auf, durch welchen die ebenfalls schon erwähnte Stromleitung 5 für die elektrische Heizung 2 geführt ist, das heißt, die in den Ausführungsbeispielen dargestellte Vorrichtung 1 ist als Handgerät gestaltet. Sie könnte aber auch als stationäres Gerät ausgebildet sein.

Insgesamt ergibt sich eine Vorrichtung 1, mit der der Werkzeughalter eines Werkzeug-Spannfutters schnell und effektiv durch flächige Berührung mit einem als Einsatz 3 ausgebildeten Wärmekörper erreicht werden kann, ohne daß eine offene Flamme oder ein aufwendiges Heizgebläse erforderlich sind. Gleichzeitig kann dadurch vor allem das Aufwärmen des Werkzeughalters zum Lösen eines Werkzeuges effektiver gestaltet werden, weil eine Miterwärmung des Werkzeuges praktisch ausgeschlossen ist, denn die Wärme des Einsatzes wird zunächst gezielt und praktisch ausschließlich auf einen solchen Werkzeughalter gerichtet, so daß dieser seine Aufdehnung erfährt, bevor das Werkzeug selbst nennenswert erwärmt und gedehnt wird, so daß es entsprechend schnell aus der Vorrichtung 1 und ihrem Einsatz 3 gelöst werden kann.

## Patentansprüche

1. Vorrichtung (1) zum Aufheizen eines zu einem Werkzeug-Spannfutter gehörenden Werkzeughalters, welches Werkzeug-Spannfutter ein in eine Werkzeugmaschine einsetzbares Kupplungsteil und den zum Beispiel zylindrischen oder konischen Werkzeughalter mit einer koaxialen Paßbohrung zur Aufnahme des Schaftes eines auswechselbaren Werkzeuges aufweist, wobei die Vorrichtung (1) eine Heizung (2) zum Aufheizen und Dehnen des Werkzeughalters und seiner Paßbohrung aufweist, **dadurch gekennzeichnet,** daß die Vorrichtung (1) einen Einsatz (3) mit einer paßgenauen Innenöffnung (4) zur Aufnahme und flächigen Berührung der Außenseite des Werkzeughalters aufweist, daß der Einsatz (3) aus einem wärmeleitenden Werkstoff oder Metall besteht und mit der Heizung (2) beheizbar ist und daß der Einsatz (3) und ein ihn haltendes Gehäuse (7) in einer Längsmittel- oder Durchmesserebene, in der auch die Mittelachse der Aufnahmeöffnung (4) verläuft, geteilt ist und die Teile des Einsatzes (3) und seines Gehäuses (7) voneinander trennbar oder auseinander bewegbar sind.

2. Vorrichtung nach Anspruch 1, dadurch gekennzeichnet, daß zum Beheizen des Einsatzes (3) und damit des Werkzeughalters eine elektrische Heizung (2) vorgesehen ist.

3. Vorrichtung nach Anspruch 1 oder 2, dadurch gekennzeichnet, daß die Heizung (2) an der Außenseite des Einsatzes (3) etwa konzentrisch zu seiner Innenöffnung (4) angeordnet und insbesondere als Heizspirale oder elektrisches Heizband ausgebildet ist.

4. Vorrichtung nach einem der Ansprüche 1 bis 3, dadurch gekennzeichnet, daß die Innenöffnung (4) durch den gesamten Einsatz (3) verläuft und nach beiden Seiten offen ist.

5. Vorrichtung nach einem der Ansprüche 1 bis 4, dadurch gekennzeichnet, daß der Einsatz (3) lösbar und austauschbar in einem Gehäuse (7) der Vorrichtung (1) angeordnet ist.

6. Vorrichtung nach einem der Ansprüche 1 bis 5, dadurch gekennzeichnet, daß die Heizung (2) für den Einsatz (3) in einer Längsmittel- oder Durchmesserebene geteilt und trennbar oder auseinander bewegbar ist.

7. Vorrichtung nach einem der Ansprüche 1 bis 6, dadurch gekennzeichnet, daß am Rand des Einsatzes (3) oder seines Gehäuses (7) ein Gelenk oder Scharnier angeordnet ist, dessen Achse parallel zur Mittelachse der Innenöffnung (4) verläuft und um welche wenigstens eines der Teile des Einsatzes (3) und des entsprechenden Gehäuses (7) relativ zu dem anderen verschwenkbar ist, oder daß eine Schiebeführung vorgesehen ist, mittels welcher der eine Teil des Einsatzes (3) und des zugehörigen Gehäuses (7) relativ zu dem anderen verschiebbar ist.

8. Vorrichtung nach einem der Ansprüche 1 bis 7, dadurch gekennzeichnet, daß der Einsatz, seine Heizung und das Gehäuse einen Handgriff (12) aufweisen, durch welchen gegebenenfalls auch die Stromleitung (5) für die elektrische Heizung (2) geführt ist.

9. Vorrichtung nach einem der Ansprüche 1 bis 8, dadurch gekennzeichnet, daß sie als stationäres Gerät ausgebildet ist.

## Claims

1. Apparatus (1) for heating a tool holder belonging to a tool chuck, said tool chuck comprising a coupling part which can be inserted in a machine tool, and the tool holder, which may be cylindrical or conical, for example, with a coaxial fitting bore for accommodating the shaft of a replaceable tool, the apparatus (1) having a heater (2) for heating and expanding the tool holder and its fitting bore, characterised in that the apparatus (1) has an insert (3) with a precision-fit inner opening (4) for accommodating and making flat contact with the outside of the tool holder, in that the insert (3) consists of a heat-conducting material or metal and is heatable with the heater (2) and in that the insert (3) and a housing (7) holding it is divided in a longitudinal or diametric plane in which the central axis of the accommodating opening (4) also extends, and the parts of the insert (3) and its housing (7) are adapted to be separated from one another or moved apart.

2. Apparatus according to claim 1, characterised in that an electric heater (2) is provided for heating the insert (3) and hence the tool holder.

3. Apparatus according to claim 1 or 2, characterised in that the heater (2) is mounted on the outside of the insert (3) substantially concentrically to the inner opening (4) thereof and is constructed, in particular, as a heating coil or an electrical heating strip.

4. Apparatus according to one of claims 1 to 3, characterised in that the inner opening (4) runs right through the insert (3) and is open on both sides.

5. Apparatus according to one of claims 1 to 4, characterised in that the insert (3) is releasably and replaceably mounted in a housing (7) of the apparatus (1) .

6. Apparatus according to one of claims 1 to 5, characterised in that the heater (2) for the insert (3) is divided in a longitudinal or diametric plane and can be separated or moved apart.

7. Apparatus according to one of claims 1 to 6, characterised in that on the edge of the insert (3) or the housing (7) thereof is provided a joint or hinge, the axis of which runs parallel to the central axis of the inner opening (4) and about which at least one of the parts of the insert (3) and the corresponding housing (7) is pivotable relative to the other part, or in that a sliding guide is provided by means of which one part of the insert (3) and the associated housing (7) can be moved relative to the other.

8. Apparatus according to one of claims 1 to 7, characterised in that the insert, its heater and the housing have a handle (12) through which the circuit (5) for the electric heater (2) may optionally also pass.

9. Apparatus according to one of claims 1 to 8, characterised in that it is constructed as a stationary piece of equipment.

## Revendications

1. Dispositif (1) pour chauffer un porte-outils appartenant à un plateau de serrage pour outils, lequel plateau de serrage pour outils comporte un élément d'accouplement pouvant être monté dans une machine-outil et le porte-outils, par exemple cylindrique ou conique, avec un alésage ajusté coaxial pour loger la queue d'un outil interchangeable, le dispositif (1) comportant un dispositif de chauffage (2) pour chauffer et dilater le porte-outils et son alésage ajusté, caractérisé en ce que le dispositif (1) comporte un insert (3) avec une ouverture intérieure précisément ajustée (4) pour le logement et le contact affleurant de la face extérieure du porte-outils, en ce que l'insert (3) se compose d'un matériau ou d'un métal conduisant la chaleur et peut être chauffé avec le dispositif de chauffage (2) et en ce que l'insert (3) et un boîtier le renfermant (7) est divisé dans un plan diamétral ou longitudinal central dans lequel passe également l'axe central de l'ouverture de logement (4) et en ce que les parties de l'insert (3) et de son boîtier (7) peuvent être mutuellement séparées ou déplacées les unes par rapport aux autres.

2. Dispositif selon la revendication 1, caractérisé en ce qu'un dispositif de chauffage électrique (2) est prévu pour chauffer l'insert (3) et ainsi le porte-outils.

3. Dispositif selon la revendication 1 ou 2, caractérisé en ce que le dispositif de chauffage (2) est disposé sur la face extérieure de l'insert (3) sur un plan approximativement concentrique à son ouverture intérieure (4), et en ce qu'il est en particulier conçu sous forme d'une spirale chauffante ou d'un ruban de chauffe électrique.

4. Dispositif selon l'une des revendications 1 à 3, caractérisé en ce que l'ouverture intérieure (4) s'étend à travers tout l'insert (3) et en ce qu'elle est ouverte des deux côtés.

5. Dispositif selon l'une des revendications 1 à 4, caractérisé en ce que l'insert (3) est placé de façon amovible et interchangeable dans un boîtier (7) du dispositif (1).

6. Dispositif selon l'une des revendications 1 à 5, caractérisé en ce que le dispositif de chauffage (2) pour l'insert (3) est divisé dans un plan diamétral ou longitudinal central, et en ce qu'il peut être séparé ou déplacé dans ses différentes parties.

7. Dispositif selon l'une des revendications 1 à 6, caractérisé en ce qu'un élément articulé ou une charnière est disposé(e) au niveau du bord de l'insert (3) ou de son boîtier (7), dont l'axe s'étend parallèlement à l'axe central de l'ouverture intérieure (4) et autour duquel au moins l'une des parties de l'insert (3) et du boîtier correspondant (7) peut être pivotée par rapport à l'autre, ou en ce qu'un dispositif de guidage coulissant est prévu, au moyen duquel l'une des parties de l'insert (3) et du boîtier associé (7) peut être déplacée par rapport à l'autre.

8. Dispositif selon l'une des revendications 1 à 7, caractérisé en ce que l'insert, son dispositif de chauffage et le boîtier présentent une poignée (12) à travers laquelle est éventuellement également passée une ligne électrique (5) pour le dispositif de chauffage électrique (2).

9. Dispositif selon l'une des revendications 1 à 8, caractérisé en ce qu'il est conçu sous forme d'un appareil fixe.
